**Europäisches Patentamt**

**European Patent Office**

**Office européen des brevets**

(19)

(11) Veröffentlichungsnummer: **0 010 601 B1**

(12) # EUROPÄISCHE PATENTSCHRIFT

(45) Veröffentlichungstag der Patentschrift:
05.05.82

(51) Int. Cl.³: **C 08 G 18/08**

(21) Anmeldenummer: **79103461.4**

(22) Anmeldetag: **17.09.79**

---

(54) Verfahren zur Herstellung von Polyurethan-Elastomeren.

---

(30) Priorität: **30.09.78 DE 2842806**

(43) Veröffentlichungstag der Anmeldung:
**14.05.80 Patentblatt 80/10**

(45) Bekanntmachung des Hinweises auf die Patenterteilung:
**05.05.82 Patentblatt 82/18**

(84) Benannte Vertragsstaaten:
**AT CH DE FR GB IT NL**

(56) Entgegenhaltungen:
**DE-A-1 570 969**
**DE-A-1 964 834**
**DE-A-2 059 570**
**DE-A-2 302 564**
**DE-A1-2 423 764**
**DE-A1-2 447 368**
**DE-A1-2 610 980**

**ENCYCLOPEDIA OF POLYMER SCIENCE AND TECHNOLOGY, Band 11, 1969, INTERSCIENCE PUBLISHERS, New York Seite 549.**

(73) Patentinhaber: **BAYER AG, Zentralbereich Patente, Marken und Lizenzen, D-5090 Leverkusen 1, Bayerwerk (DE)**

(72) Erfinder: **Niederdellmann, Georg, Dr., Heinstrasse 6, D-4047 Dormagen (DE)**
Erfinder: **Goyert, Wilhelm, Dr., Wolfskaul 10, D-5000 Köln 80 (DE)**
Erfinder: **Meisert, Ernst, Dr., Am Kiesberg 19, D-5090 Leverkusen 1 (DE)**
Erfinder: **Eitel, Alfred, Dr., Bahnhofstrasse 41, D-4047 Dormagen (DE)**
Erfinder: **Wagner, Hans, Dr., Tizianstrasse 13, D-4047 Dormagen (DE)**
Erfinder: **Hespe, Hans, Dr., Walter-Flex-Strasse 14, D-5090 Leverkusen 1 (DE)**

### Verfahren zur Herstellung von Polyurethan-Elastomeren

Die vorliegende Erfindung betrifft ein verbessertes kontinuierliches Verfahren zur Herstellung von Polyurethan-Elastomeren, die sich gegenüber nach bekannten Verfahren hergestellten Produkten durch erhöhte Elastizität, verringerten Schrumpf, höhere Steifigkeit (Grenzbiegespannung), verbesserte Kältekerbschlagzähigkeit sowie gute Wärmestandfestigkeit auszeichnen.

Thermoplastische Polyurethan-Elastomere auf der Grundlage von Polyisocyanaten, Polyhydroxylverbindungen und Kettenverlängerungsmitteln werden im Kunststoff-Handbuch, (Band VII) von Vieweg-Höchtlen, Carl-Hanser-Verlag, ausführlich beschrieben. Für die technische Herstellung derartiger Kunststoffe sind verschiedene Verfahren bekannt geworden, die z.B. in den DE-Auslegeschriften 1 106 959, 1 157 772 und 1 165 852, der englischen Patentschrift 1 057 018 sowie den DE-Offenlegungsschriften 2 059 570, 2 302 564 sowie 2 423 764 beschrieben werden.

Von besonderem Interesse ist dabei das Verfahren gemäss den beiden letztgenannten DE-Offenlegungsschriften, wonach in technisch einfacher Weise Polyurethane bzw. Polyurethanharnstoffe mit guten mechanischen Eigenschaften durch direkte Umsetzung von Polyisocyanaten mit Polyolen bzw. aminofunktionellen Verbindungen in einer zweiwelligen Schneckenmaschine mit selbstreinigender Schneckengeometrie kontinuierlich hergestellt werden können.

Alle oben genannten Verfahren zur Herstellung von Polyurethan-Elastomeren sind Einstufen- («One shot») oder Präpolymerverfahren und führen theoretisch zu Polymeren mit statistischer Verteilung der aus Polyisocyanat und höhermolekularem Polyol entstandenen «Weichsegmente» einerseits und der aus Polyisocyanat und Kettenverlängerer gebildeten «Hartsegmente» andererseits. Die jedem Fachmann bekannten Reaktivitätsschwankungen der technischen Ausgangskomponenten bewirken jedoch in der Praxis häufig (unterschiedlich starke) Abweichungen von der rein statistischen Hart-/Weichsegment-Verteilung und führen daher auch bei gleicher Rezeptur und unveränderten Reaktionsbedingungen zu Produktionschargen mit stark unterschiedlichem Eigenschaftsbild. Diese Effekte erfordern bei vielen Anwendungszwecken der produzierten Elastomeren einen aussergewöhnlich hohen nachträglichen Prüf- und Selektieraufwand.

Es besteht somit Bedarf nach einem technischen Produktionsverfahren für Polyurethan-Elastomere aus höhermolekularen Polyolen, Kettenverlängerungsmitteln und Polyisocyanaten, welches diese Nachteile nicht aufweist und unabhängig von schwankenden Rohstoffqualitäten zu hochwertigen Elastomeren mit reproduzierbarem Eigenschaftsniveau führt.

Es wurde nun überraschend gefunden, dass diese Aufgabenstellung durch eine Modifizierung des bekannten Reaktionsschnecken-Verfahrens, insbesondere jener der schon erwähnten DE-Offenlegungsschriften 2 302 564 und 2 423 764 gelöst werden kann, indem man mindestens eine der oben genannten Ausgangskomponenten (Polyisocyanat; höhermolekulare Polyhydroxylverbindung; Kettenverlängerungsmittel) in jeweils mindestens 2 Teilmengen an getrennten Stellen in die Schneckenmaschine einbringt. Man erhält auf diese Weise reproduzierbar homogene Elastomere mit gegenüber dem Stand der Technik deutlich verbesserten Eigenschaften, insbesondere hinsichtlich Grenzbiegespannung, Kerbschlagzähigkeit in der Kälte, Rückprallelastizität und Schrumpf.

Gegenstand der vorliegenden Erfindung ist somit ein Verfahren zur kontinuierlichen Herstellung von Polyurethan- und Polyurethanharnstoff-Elastomeren durch Umsetzung von

A) Polyisocyanaten mit

B) Polyhydroxylverbindungen vom Molekulargewicht 400 bis 10 000,

C) mindestens zwei Zerewitinow-aktive Wasserstoffatome aufweisenden Kettenverlängerungsmitteln mit einem Molekulargewicht unter 400, sowie gegebenenfalls

D) Monoisocyanaten und/oder gegenüber Isocyanaten monofunktionellen Verbindungen, gegebenenfalls in Gegenwart von

E) Aktivatoren, Stabilisatoren, Gleitmitteln und weiteren an sich bekannten Zuschlagstoffen,

in einer Reaktionsschnecke, vorzugsweise einer zweiwelligen Schneckenmaschine mit gleichsinnig rotierenden Schneckenwellen und selbstreinigender Schneckengeometrie, bei Temperaturen zwischen 70 und 260°C und in einem Viskositätsbereich in der Schneckenmaschine von etwa 0,01 bis 300 Pa.s, wobei vorzugsweise zwecks Erzielung eines besonders homogenen, knötchenfreien Endproduktes die kritische Reaktionsphase, in der das Reaktionsgemisch starke Klebrigkeit und eine Viskosität im Bereich zwischen 10 und 100 Pa.s, insbesondere 20 bis 70 Pa.s aufweist, in einer Schneckenzone mit intensiv mischenden Knetelementen unter Einwirkung einer Knetfrequenz von 1 bis 20 Hertz und bei einem Geschwindigkeitsgefälle im radialen Spiel zwischen Kamm und Gehäusewand von mehr als 2000 sec$^{-1}$ durchlaufen wird, welches dadurch gekennzeichnet ist, dass eine oder zwei der Komponenten A), B) und C) in jeweils mindestens zwei Teilmengen an getrennten Stellen der Schneckenmaschine eingespeist werden, wobei jede Teilmenge mindestens 4 Gew.-%, vorzugsweise mehr als 10 Gew.-%, der Gesamtmenge der jeweiligen Komponente beträgt.

Für das erfindungsgemässe Verfahren besonders geeignete Schneckenmaschinen und Knetelemente werden im Detail in den DE-Offenlegungsschriften 2 302 564, 2 423 764 und 2 549 372 (US-PS 3 963 679) beschrieben. Im Unterschied zu diesen bekannten Verfahren wird erfindungsgemäss mindestens eine der Ausgangskomponenten in mindestens zwei Teilmengen in den Extruder eingespeist. Zu diesem Zweck weist bei der erfindungsgemäss bevorzugten Arbeitsweise die Schneckenmaschine nach der gemäss den DE-Offenlegungsschriften 2 302 564, 2 423 764 und 2'549 372 wesentlichen ersten Knetzone (in welcher das Reaktionsgemisch die kritische Reaktionsphase mit einer Viskosität von 10 bis 100 Pa.s, insbesondere 20 bis 70 Pa.s, durchläuft) eine zweite Einlassöffnung auf, durch welche die zweite Teilmenge der Reaktionskomponente zudosiert werden kann. Da auf diese Weise die Viskosität des Reaktionsgemisches in der Regel wieder unter den kritischen Wert von ca. 100 Pa.s sinkt, wird im Anschluss an diese zweite Einspeisstelle vorzugsweise eine weitere Knetzone angeordnet. Nach dieser zweiten Knetzone kann der Extruder selbstverständlich noch eine dritte Einlassöffnung aufweisen, durch welche gegebenenfalls eine dritte Teilmenge der Reaktionspartner zudosiert werden kann. Im Anschluss daran befindet sich vorzugsweise wieder eine Knetzone, usw.

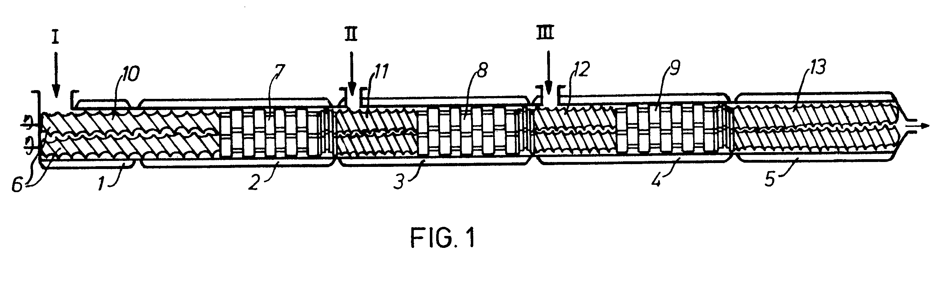

Eine für das erfindungsgemässe Verfahren geeignete Schneckenmaschine ist schematisch in Fig. 1 dargestellt:

(6) sind die beiden im gleichen Sinn rotierenden Schneckenwellen, auf welchen Gewindeförderzonen (10, 11, 12, 13) und Knetzonen (7, 8, 9) angeordnet sind. I), II) und III) stellen drei Einlassöffnungen für die verschiedenen Teilmengen der Reaktionskomponente dar. Durch geeignete Temperaturführung in den heiz- bzw. kühlbaren Gehäusezonen (1, 2, 3, 4, 5) und/oder durch Katalysatorzusatz wird gewünschtenfalls erreicht, dass die oben definierte kritische Reaktionsphase in eine Knetzone (7, 8, 9) verlegt wird. Die Viskosität in den einzelnen Zonen der Schneckenmaschine kann aus dem Viskositätsverlauf eines analogen Reaktionsansatzes in einem Rührkessel und der Verweilzeit des Reaktionsgemisches im Extruder berechnet werden; einfacher ist es, die Viskosität des Reaktionsgemisches in der Schneckenmaschine direkt mittels parallel geschalteter Seitenstromviskosimeter zu messen, wie sie z.B. von der Firma Herbert K. Bruss, Bad Soden/Taunus, BRD, vertrieben werden (siehe auch den Artikel von Herbert K. Bruss in «Chemie-Anlagen + Verfahren», Heft 10/1970, Konradin-Verlag, Stuttgart).

Der vorliegende Erfindungsgedanke lässt sich vorzugsweise in den drei im folgenden näher beschriebenen Verfahrensvarianten verwirklichen, nämlich 1) durch Primäraufbau von Hartsegmentbereichen, 2) durch Primäraufbau von Weichsegmentbereichen und 3) durch sekundäre Hartsegment-Injektion.

Da ein primär erzeugtes reines Hartsegment wegen seiner hohen Schmelztemperatur zur Erzielung einer homogenen Reaktionsmasse unerwünscht hohe Reaktionstemperaturen erfordern würde, wird bei erfindungsgemässer Verfahrensvariante 1) (vgl. hierzu die Beispiele 1 und 2 sowie Fig. 1) unter Ausnutzung des natürlichen Reaktivitätsunterschieds zwischen Kettenverlängerungsmittel und Polyhydroxylverbindung so verfahren, dass in Abwesenheit von Katalysatoren und bei relativ niedriger Temperatur (ca. 50 - 90°C) die Gesamtmenge des Polyisocyanats und des Kettenverlängerungsmittels sowie 10 bis 50 Gew.-%, vorzugsweise 20 - 30 Gew.-%, der Polyhydroxylverbindung in die Einspeisstelle I der Schneckenmaschine und die verbliebene Restmenge der Polyhydroxylverbindung mit vorzugsweise erhöhter Temperatur (ca. 120 - 200°C) und vorzugsweise unter Mitverwendung von Katalysatoren in eine der nachfolgenden Einspeisstellen II oder III der Schneckenmaschine dosiert werden. Bei einem von ca. 70°C auf 140°C steigenden Temperaturprofil (Gehäusetemperatur) bildet sich auf diese Weise zunächst das in der Polyhydroxylkomponente fein dispergierte Hartsegment, während sich bei einem von ca. 200°C auf 100°C abfallenden Temperaturprofil (Gehäusetemperatur) in bevorzugt katalysierter Reaktion die Weichsegmentbildung anschliesst.

Bei erfindungsgemässer Verfahrensvariante 2) werden zuerst die Gesamtmenge der Polyhydroxylverbindung und eine solche Teilmenge des Polyisocyanats in die Einspeisstelle I der Schneckenmaschine dosiert, dass sich bei molaren Verhältnissen von 1,2 : 1 - 3 : 1 oder 0,6 : 1 - 0,9 : 1 zunächst intermediär Hydroxyl- oder Isocyanatendgruppen enthaltende Weichsegmenteinheiten bilden. Die Restmenge des Polyisocyanats und die Gesamtmenge des Kettenverlängerungsmittels werden, getrennt oder gemeinsam, über die Einspeisstellen II und/oder III der Schneckenmaschine zudosiert, wobei eine Verknüpfung der vorgebildeten Weichsegmentbereiche durch die nachträglich gebildeten Hartsegmentsequenzen erfolgt. Das molare Verhältnis von Isocyanatgruppen zur Summe aller Zerewitinow-aktiven Gruppen, bezogen auf die Gesamtreaktion, liegt bei den Verfahrensvarianten 1) und 2) zwischen 0,90 und 1,20, vorzugsweise zwischen 0,97 und 1,10.

Bei der erfindungsgemässen Verfahrensvariante 3) wird zunächst intermediär ein weich eingestelltes Polyurethanelastomer erzeugt, in das in einem anschliessenden zweiten Reaktionsschritt gezielt Hartsegmentbereiche eingebunden werden. Zu diesem Zweck werden zunächst die Gesamtmenge der Polyhydroxylverbindung, 10 - 80 Gew.-%, vorzugsweise 15 - 75, besonders bevorzugt 30 - 60 Gew.-%, des Polyisocyanats sowie 5 - 75 Gew.-%, vorzugsweise 10 - 70 Gew.-%, besonders bevorzugt 25 - 50 Gew.-%, des Kettenverlängerungsmittels über die Einspeisstelle I und die Restmengen des Diisocyanats und des Kettenverlängerungsmittels, getrennt oder gemeinsam, über die Einspeisstellen II und/ oder III der Schneckenmaschine zudosiert, wobei das molare Verhältnis der freien Isocyanatgruppen zur Summe aller Zerewitinow-aktiven Gruppen, bezogen sowohl auf den ersten Reaktionsschritt als auch auf die Gesamtreaktion, zwischen 0,90 und 1,20, vorzugsweise zwischen 0,97 und 1,10 liegt.

Als im wesentlichen lineare Polyhydroxylverbindungen mit Molekulargewichten zwischen 400 und 10 000, bevorzugt zwischen 450 und 6 000, kommen erfindungsgemäss praktisch alle an sich bekannten, vorzugsweise 2, gegebenenfalls — in untergeordneten Mengen — auch 3, Zerewitinow-aktive Gruppen (im wesentlichen Hydroxylgruppen) enthaltenden Polyester, Polylactone, Polyäther, Polythioäther, Polyesteramide, Polycarbonate, Polyacetale, Vinylpolymere wie z.B. Polybutadiendiole, bereits Urethan- oder Harnstoffgruppen enthaltenden Polyhydroxylverbindungen, gegebenenfalls modifizierte natürliche Polyole, sowie auch andere Zerewitinowaktive Gruppen wie Amino-, Carboxyl- oder Thiolgruppen enthaltende Verbindungen in Betracht. Diese Verbindungen entsprechen dem Stand der Technik und werden z.B. in den DE-Offenlegungsschriften 2 302 564, 2 423 764 und 2 549 372 (US-Patent 3 963 679) und 2 402 840 (US-Patent 3 984 607) sowie der DE-AS 2 457 387 (US-Patent 4 035 213) eingehend beschrieben. Erfindungsgemäss bevorzugt sind hydroxylgruppenhaltige Polyester aus Glykolen und Adipinsäure, Phthal- und/oder Terephthalsäure sowie deren Hydrierungsprodukten, Hydroxylpolycarbonate, Polycaprolactone, Polyäthylenoxid, Polypropylenoxid, Polytetrahydrofuran und Mischpolyäther aus Äthylenoxid und Propylenoxid.

Erfindungsgemäss zu verwendende Polyisocyanate sind die an sich bekannten aliphatischen, cycloaliphatischen, aromatischen, araliphatischen und heterocyclischen Diisocyanate sowie gegebenenfalls anteilsweise auch Triisocyanate des Standes der Technik, wie sie zum Beispiel in den bereits genannten DE-Offenlegungsschriften 2 302 564, 2 423 764, 2 549 372, 2 402 840 und 2 457 387 beschrieben sind. Erfindungsgemäss bevorzugte Diisocyanate sind gegebenenfalls substituiertes Hexamethylen-diisocyanat, Isophorondiisocyanat, Lysinesterdiisocyanate, die verschiedenen Toluylen-, Diphenylmethan- und Xylylendiisocyanate sowie deren Hydrierungsprodukte.

Auch die erfindungsgemäss einzusetzenden Kettenverlängerungsmittel, d.h. niedermolekulare, Hydroxylgruppen und/oder Aminogruppen und/oder Thiolgruppen und/oder Carboxylgruppen aufweisende Verbindungen sind an sich bekannt und z.B. in den DE-Offenlegungsschriften 2 302 564, 2 549 372, 2 402 799, 2 402 840, 2 423 764, 2 457 387 und 2 644 923 beschrieben.

Erfindungsgemäss bevorzugt werden Glykole wie z.B. Äthylenglykol, Di- und Triäthylenglykol, Propandiol-(1,2), Butandiol-(1,3) und -(1,4), Hexandiol-(1,6), 2-Äthylhexandiol-(1,3), 2,2-Dimethylpropandiol, 1,4-Bis-hydroxymethylcylohexan und Hydrochinondihydroxyäthyläther. Besonders bevorzugt sind Äthylenglykol, Diäthylenglykol, Propandiol-(1,2), Butandiol-(1,3) und -(1,4) und Hexandiol-(1,6).

Gegebenenfalls können auch Monoisocyanate bzw. gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden.

Derartige monofunktionelle Verbindungen sind z.B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther usw.

Das erfindungsgemässe Verfahren kann in Gegenwart von üblichen Stabilisatoren, Gleitmitteln, Farbstoffen, Pigmenten und anderen Zuschlagstoffen wie Füll- und Verstärkungsmitteln, z.B. auch anderen Thermoplasten, durchgeführt werden.

Die Umsetzung der Reaktionspartner kann mit den für Isocyanatreaktionen gebräuchlichen Katalysatoren in Mengen von 0,0001 - 5 Gew.-%, vorzugsweise 0,0005 - 2 Gew.-% (bezogen auf Polyurethanfeststoff), beschleunigt werden. Geeignete Katalysatoren sind z.B. tertiäre Amine wie Triäthylamin, N-Methylmorpholin, N,N,N',N'-Tetramethyl-äthylendiamin, 1,4-Diazabicyclo-(2,-2,2)-octan, N,N-Dimethylbenzylamin, 2-Methylimidazol usw., organische Metallverbindungen wie z.B. Zinkoctoat, Zinn(II)-octoat, Dibutylzinn-(IV)-dilaurat, Eisenacetylacetonat, Titantetrabutylat, Dioctylzinn(IV)-diacetat usw., sowie Basen wie Tetraalkylammoniumhydroxide, Natriumhydroxyd, Natriumphenolat usw.

Weitere Vertreter von erfindungsgemäss zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Je nach ihrem Vernetzungsgrad können die erfindungsgemäss hergestellten Elastomere in an sich bekannter Weise thermoplastisch und/oder aus ihrer Lösung in einem organischen Lösungsmmitel(gemisch) verarbeitet werden.

In den folgenden Beispielen wurde eine zweiwellige, selbstreinigende Schneckenmaschine des Typs ZSK 53 der Firma Werner & Pfleiderer mit den folgenden Dimensionen verwendet:

| | |
|---|---|
| Wellendurchmesser: | 53 mm |
| Länge der Welle: | 2220 mm |
| Länge der Knetzonen: | 150 mm (7), 300 mm (8), 180 mm (9) |
| Länge der Förderzonen: | 570 mm (10), 510 mm (11), 180 mm (12), 330 mm (13) |
| Radialspiel: | ca. 0,1 mm |
| Umdrehungszahl: | 300 pro Minute |
| Produktdurchsatz: | ca. 80 kg/h |

Der Extruder war, wie in Fig. 1 schematisch dargestellt, mit 3 Einlassöffnungen und 5 heiz- bzw. kühlbaren Gehäusezonen versehen.

Beispiel 1 a (Vergleich)
100,0 Gew.-Teile eines Mischpolyesters aus Adipinsäure, Butandiol-1,4 und Äthylenglykol (OH-Zahl = 55,4; Säurezahl = 0,7), welcher mit 10 ppm Titantetrabutylat aktiviert wurde, 0,3 Gew.-Teile Stearylamid, 25,0 Gew.-Teile Butandiol-1,4 sowie 84,2 Gew.-Teile flüssiges 4,4'-Diisocyanatodiphenylmethan wurden kontinuierlich in konstantem Mengenverhältnis gleichzeitig in die Einspeisstelle I der zweiwelligen Schneckenmaschine eingespeist und gemäss Beispiel 4 von DE-OS 2 302 564 umgesetzt.

Es wurde ein homogenes, klar-transparentes Polyurethan mit einer Zugfestigkeit (DIN 53 504) von 47 MPa bei 480% Bruchdehnung (DIN 53 504), und folgenden Elastomereigenschaften erhalten:

Grenzbiegespannung: 5,1 MPa (DIN 53 452)
Kerbschlagzähigkeit
  bei −20°C: 3,6 KJ/m² (DIN 53 453)
Rückprallelastizität: 27% (DIN 53 512)

Beispiel 1 b (Erfindungsgemässes Verfahren)
Es wurden die gleichen Rohstoffe wie in Beispiel 1 a verwendet, wobei jedoch 25,0 Gew.-Teile des Mischpolyesters ohne Aktivatorzusatz, 0,3 Gew.-Teile Stearylamid, 25,0 Gew.-Teile Butandiol-1,4 sowie 84,2 Gew.-Teile flüssiges 4,4'-Diisocyanatodiphenylmethan in die Einspeisstelle I und 75,0 Gew.-Teile des Mischpolyesters, aktiviert mit 12,5 ppm Titantetrabutylat, in die Einspeisstelle II der Schneckenmaschine eindosiert wurden. Die Rohstofftemperaturen betrugen an Einspeisstelle I 50 - 70°C, an Einspeisstelle II 135°C. An der Schneckenmaschine wurde folgendes Temperaturprofil eingestellt:

Heizzone 1: 70°C
Heizzone 2: 140°C
Heizzone 3: 200°C
Heizzone 4: 180°C
Heizzone 5: 100°C

Es wurde ein homogenes, schwach opakes Polyurethan mit einer Zugfestigkeit von 52 MPa bei 510% Bruchdehnung und den folgenden, verbesserten Elastomereigenschaften erhalten:

Grenzbiegespannung: 6,9 MPa
Kerbschlagzähigkeit
  bei −20°C: 33,3 KJ/m²
Rückprallelastizität: 34%

Beispiel 2 a (Vergleich)
50,0 Gew.-Teile eines Mischpolyesters aus Adipinsäure, Butandiol-1,4 und Äthylenglykol (OH-Zahl = 56,2; Säurezahl = 0,5), 50,0 Gew.-Teile Hexandiol-1,6-polycarbonat (OH-Zahl = 54,8; Säurezahl = 0,1), 13,0 Gew.-Teile Butandiol-1,4 und 49,5 Gew.-Teile 4,4'-Diisocyanatodiphenylmethan wurden wie in Beispiel 1 a in die Einspeisstelle I der Schneckenmaschine eingespeist. Es wurde ein homogenes Polyurethan mit guten mechanischen Festigkeiten, jedoch unerwünscht hohem Schrumpf (6,1% nach Tempern) und zu niedriger Rückprallelastizität (27%) erhalten.

Beispiel 2 b (Erfindungsgemässes Verfahren)
Es wurden die gleichen Rohstoffe wie in Beispiel 2 a verwendet, jedoch wurden unter den Reaktionsbedingungen des Beispiels 1 b 25,0 Gew.-Teile des Mischpolyesters, 13,0 Gew.-Teile Butandiol-1,4 und 49,5 Gew.-Teile 4,4'-Diisocyanatodiphenylmethan in die Einspeisstelle I sowie 25,0 Gew.-Teile des Mischpolyesters und 50,0 Gew.-Teile des Hexandiolpolycarbonats in Einspeisstelle II der Schneckenmaschine eindosiert. Es wurde ein homogenes Polyurethan mit gleich guten mechanischen Festigkeiten, jedoch deutlich niedrigerem Schrumpf (3,5% nach Tempern) und verbesserter Rückprallelastizität (33%) erhalten.

Beispiel 3
Entsprechend der Gesamtrezeptur der Beispiele 1 a und b wurden 100,0 Gew.-Teile eines Mischpolyesters aus Adipinsäure, Butandiol-1,4 und Äthylenglykol (OH-Zahl = 55,4; Säurezahl = 0,7), 0,3 Gew.-Teile Stearylamid und 8,2 Gew.-Teile 4,4'-Diisocyanatodiphenylmethan in Einspeisstelle I sowie 25,0 Gew.-Teile Butandiol-1,4 und 76,0 Gew.-Teile 4,4'-Diisocyanatodiphenylmethan in Einspeisstelle II der Schneckenmaschine eindosiert, wobei an der Schneckenmaschine folgendes Temperaturprofil eingestellt wurde:

Heizzone 1: 100°C
Heizzone 2: 250°C
Heizzone 3: 260°C
Heizzone 4: 200°C
Heizzone 5: 110°C

Es wurde ein homogenes, schwach opakes Polyurethan-Elastomer mit folgenden Eigenschaften erhalten:

Zugfestigkeit: 57 MPa
Bruchdehnung: 700%
Grenzbiegespannung: 6,8 MPa
Kerbschlagzähigkeit
  bei −20°C: >40 KJ/m²
Rückprallelastizität: 39%

Beispiel 4 a (Vergleich)
100,0 Gew.-Teile Hexandiol-1,6-polycarbonat (OH-Zahl = 60,0; Säurezahl < 0,1), 20,0 Gew.-Teile Butandiol-1,4, 1,0 Gew.-Teile N-Methylstearylamin, 0,2 Gew.-Teile Stearylsäurebutylester und 71,5 Gew.-Teile 4,4'-Diisocyanatodiphenylmethan wurden wie in Beispiel 1 a in konstantem Mengenverhältnis in die Einspeisstelle I der Schneckenmaschine eingespeist.

Das erhaltene, homogene Polyurethanelastomer wies eine Zugfestigkeit von 38,5 MPa bei 400% Bruchdehnung, eine Rückprallelastizität von 34% und eine Härte von 57 Shore D auf.

Beispiel 4 b (Erfindungsgemässes Verfahren)
Im Gegensatz zum Vergleichsbeispiel 4 a wurde durch Einspeisung der Reaktionskomponenten in die Dosierstelle I intermediär in den ersten Zonen der Reaktionsschnecke ein thermoplastisches Polyurethan aus 100,0 Gew.-Teilen Hexandiol-1,6-polycarbonat, 10,0 Gew.-Teilen Butandiol-1,4, 0,2 Gew.-Teilen Stearylsäurebutylester und 42,4 Gew.-Teilen 4,4'-Diisocyanatodiphenylmethan hergestellt. In Dosierstelle III wurden dann nach Vorvermischung 10,0 Gew.-Teile Butandiol-1,4, 1,0 Gew.-Teile N-Methylstearylamin und 29,1 Gew.-Teile 4,4'-Diisocyanatodiphenylmethan injiziert. Der entstandene Thermoplast wies bei vergleichbaren mechanischen Festigkeiten eine relativ hohe Steifigkeit und ein gutes Rückstellverhalten auf. Die Rückprallelastizität betrug 37%, die Härte erreichte 60 Shore D.

Der Thermoplast wies ferner ein ausgezeichnetes Fliessverhalten auf und eignete sich gut für die Herstellung grossflächiger, dünner Formteile.

Beispeil 5 a (Vergleich)

221,9 Gew.-Teile eines Prepolymers aus 100,0 Gew.-Teilen Tetramethylenoxidpolyäther (Molekulargewicht 2000) und 121,9 Gew.-Teilen Hexamethylen-1,6-diisocyanat, 60,0 Gew.-Teile Butandiol-1,4 und 0,2 Gew.-Teile Stearylamid wurden entsprechend dem Beispiel 1 a in konstantem Mengenverhältnis in die Einspeisstelle I der Schneckenmaschine dosiert. Die Umsetzung wurde mit Dibutylzinndilaurat katalysiert. Das erhaltene Elastomer zeigte eine Härte von 57 Shore D und eine Grenzbiegespannung von 12 MPa nach DIN 53 452.

Beispiel 5 b (Erfindungsgemässes Verfahren)

Im Gegensatz zu Beispiel 5 a wurden bei gleicher Gesamtrezeptur in Einspeisstelle I 156,6 Gew.-Teile eines Prepolymers aus 100,0 Gew.-Teilen Tetramethylenoxidpolyäther (Molekulargewicht 2000) und 56,6 Gew.-Teilen Hexamethylen-1,6-diisocyanat sowie 25,0 Gew.-Teile Butandiol-1,4 und 0,2 Gew.-Teile Stearylamid und in Einspeisstelle II nach Vorvermischung 35,0 Gew.-Teile Butandiol-1,4 und 65,3 Gew.-Teile Hexamethylen-1,6-diisocyanat injiziert. Die Reaktion wurde wiederum mit Dibutylzinndilaurat katalysiert.

Das nach diesem Verfahren erhaltene Elastomer wies eine Härte von 60 Shore D und eine Grenzbiegespannung von 15 MPa auf.

**Patentansprüche**

1. Verfahren zur kontinuierlichen Herstellung von Polyurethan- und Polyurethanharnstoff-Elastomeren durch Umsetzung von
A) Polyisocyanaten mit
B) Polyhydroxylverbindungen vom Molekulargewicht 400 bis 10 000,
C) mindestens zwei Zerewitinow-aktive Wasserstoffatome aufweisenden Kettenverlängerungsmitteln mit einem Molekulargewicht unter 400, sowie gegebenenfalls
D) Monoisocyanaten und/oder gegenüber Isocyanaten monofunktionellen Verbindungen, gegebenenfalls in Gegenwart von

E) Aktivatoren, Stabilisatoren, Gleitmitteln und weiteren an sich bekannten Zuschlagstoffen, in einer Schneckenmaschine bei Temperaturen zwischen 70 und 260°C, dadurch gekennzeichnet, dass eine oder zwei der Komponenten A), B) und C) in jeweils mindestens zwei Teilmengen an getrennten Stellen der Schneckenmaschine eingespeist werden, wobei jede Teilmenge mindestens 4 Gew.-% der Gesamtmenge der jeweiligen Komponente beträgt.

2. Verfahren nach Anspruch 1, dadurch gekennzeichnet, dass die Reaktion in einer zweiwelligen Schneckenmaschine mit gleichsinnig rotierenden Schneckenwellen und selbstreinigender Schneckengeometrie ausgeführt wird.

3. Verfahren nach Anspruch 2, dadurch gekennzeichnet, dass die Viskosität des Reaktionsgemisches in der Schneckenmaschine in einem Bereich von etwa 0,01 bis 300 Pa.s liegt, wobei zwecks Erzielung eines homogenen, knötchenfreien Endproduktes die kritische Reaktionsphase, in der das Reaktionsgemisch starke Klebrigkeit und eine Viskosität im Bereich zwischen 10 und 100 Pa.s aufweist, in einer Schneckenzone mit intensiv mischenden Knetelementen unter Einwirkung einer Knetfrequenz von 1 bis 20 Hertz und bei einem Geschwindigkeitsgefälle im radialen Spiel zwischen Kamm und Gehäusewand von mehr als 2000 sec$^{-1}$ durchlaufen wird.

4. Verfahren gemäss Anspruch 1 bis 3, dadurch gekennzeichnet dass die Gesamtmenge der Komponenten A) und C) sowie 10 - 50 Gew.-% der Komponente B) über eine erste Einspeisstelle und 90 - 50 Gew.-% der Komponente B) über eine zweite und/oder dritte Einspeisstelle der Schneckenmaschine eindosiert werden.

5. Verfahren gemäss Anspruch 4, dadurch gekennzeichnet, dass das Gewichtsverhältnis der Komponente C) und der in Einspeisstelle I eindosierten Teilmenge der Komponente B) zwischen 0,4 : 1 und 3 : 1 liegt.

6. Verfahren gemäss Anspruch 1 bis 3, dadurch gekennzeichnet, dass die Gesamtmenge der Komponente B) und 4 - 80 Gew.-% der Komponente A) über eine erste Einspeisstelle und 96 - 20 Gew.-% der Komponente A) und die Gesamtmenge der Komponente C) über eine zweite und/oder dritte Einspeisstelle der Schneckenmaschine eingespeist werden.

7. Verfahren gemäss Anspruch 6, dadurch gekennzeichnet, dass das molare Verhältnis zwischen den reaktiven Gruppen der Komponente B) und jenen der in der ersten Einspeisstelle eindosierten Teilmenge der Komponente A) zwischen 1,2 : 1 und 3 : 1 oder zwischen 0,6 : 1 und 0,9 : 1 liegt.

8. Verfahren gemäss Anspruch 1 bis 3, dadurch gekennzeichnet, dass die Gesamtmenge der Komponente B), 10 - 80 Gew.-% der Komponente A) sowie 5 - 75 Gew.-% der Komponente C) über eine erste Einspeisstelle und 90 bis 20 Gew.-% der Komponente A) sowie 95 - 25 Gew.-% der Komponente C) über eine zweite und/oder dritte Einspeisstelle der Schneckenmaschine eindosiert werden.

9. Verfahren gemäss Anspruch 8, dadurch gekennzeichnet, dass das Verhältnis von Isocyanatgruppen zu Zerewitinow-aktiven Gruppen der in der ersten Einspeisstelle eindosierten Komponenten zwischen 0,90 : 1 und 1,20 : 1 liegt.

10. Verfahren gemäss Ansprüchen 1 - 8, dadurch gekennzeichnet, dass, bezogen auf den Gesamtumsatz, das molare Verhältnis der freien Isocyanat-Gruppen zur Summe der Zerewitinow-aktiven Wasserstoffatome zwischen 0,90 : 1 und 1,20 : 1 liegt.

**Claims**

1. Process for the continuous production of polyurethane and polyurethane urea elastomers by reaction of
A) polyisocyanates with
B) polyhydroxyl compounds having molecular weights of from 400 to 10,000,
C) chain extenders containing at least two Zerewitinow-active hydrogen atoms, having molecular weights below 400, as well as optionally
D) monoisocyanates and/or compounds which are monofunctional toward isocyanates, optionally in the presence of
E) activators, stabilisers, lubricants and other additives known per se,
in a screw machine at temperatures between 70 and 260°C, characterised in that one or two of the components A), B) and C) are introduced in at least two portions at any time at separate positions of the screw machine, each portion amounting to at least 4% by weight of the total quantity of the respective component.

2. Process according to claim 1, characterised in that the reaction is carried out in a double shaft screw machine having screw shafts rotating in the same direction and self-cleaning screw geometry.

3. Process according to claim 2, characterised in that the viscosity of the reaction mixture in the screw machine is in a range of about 0.01 to 300 Pa.s, wherein, in order to obtain a homogeneous, lump-free end product, the critical reaction phase, in which the reaction mixture is very tacky and has a viscosity in the range between 10 and 100 Pa.s, is passed through a screw zone with intensively mixing kneading elements under the action of a kneading frequency of from 1 to 20 Hertz and at a velocity gradient in the radial clearance between comb and housing wall of more than 2000 $sec^{-1}$.

4. Process according to claim 1 to 3, characterised in that the total quantity of the components A) and C) as well as from 10 to 50% by weight of components B) are introduced via a first feed position and from 90 to 50% by weight of component B) are introduced via a second and/or third feed position of the screw machine.

5. Process according to claim 4, characterised in that the weight ratio of component C) and the portion of component B) introduced in feed position I lies between 0.4 : 1 and 3 : 1.

6. Process according to claim 1 to 3, characterised in that the total quantity of component B) and from 4 to 80% by weight of component A) are introduced via a first feed position and from 96 to 20% by weight of component A) and the total quantity of component C) are introduced via a second and/or third feed position of the screw machine.

7. Process according to claim 6, characterised in that the molar ratio between the reactive groups of component B) and those of the portion of component A) introduced in the first feed position lies between 1.2 : 1 and 3 : 1 or between 0.6 : 1 and 0.9 : 1.

8. Process according to claim 1 to 3, characterised in that the total quantity of component B), from 10 to 80% by weight of component A) as well as from 5 to 75% by weight of component C) are introduced via a first feed position and from 90 to 20% by weight of component A) as well as from 95 to 25% by weight of component C) are introduced via a second and/or third feed position of the screw machine.

9. Process according to claim 8, characterised in that the ratio of isocyanate groups to Zerewitinow-active groups of the components introduced in the first feed position lies between 0.90 : 1 and 1.20 : 1.

10. Process according to claims 1 to 8, characterised in that, based on the total conversion, the molar ratio of the free isocyanate groups to the sum of the Zerewitinow-active hydrogen atoms lies between 0.90 : 1 and 1.20 : 1.

**Revendications**

1. Procédé pour la préparation continue d'élastomères de polyuréthannes et de polyuréthanne-urées par réaction de
A) des polyisocyanates avec
B) des composés polyhydroxylés de poids moléculaire 400 à 10.000,
C) des agents d'allongement des chaînes portant au moins deux atomes d'hydrogène actifs selon Zerewitinow, à un poids moléculaire inférieur à 400, et éventuellement
D) des monoisacyanates et/ou des composés monofonctionnels vis-à-vis des isocyanates, le cas échéant en présence de
E) des activateurs, des stabilisants, des lubrifiants et d'autres additifs connus en soi,
dans une machine à vis à des températures de 70 à 260°C, caractérisé en ce que l'on introduit un ou deux des composants A), B) et C) en au moins deux portions à des endroits séparés de la machine à vis, chaque portion représentant au moins 4% du poids total du composant particulier.

2. Procédé selon la revendication 1, caractérisé en ce que l'on effectue la réaction dans une machine à vis à deux axes avec axes des vis tournant dans le même sens et géométrie autonettoyante des vis.

3. Procédé selon la revendication 2, caractérisé en ce que la viscosité du mélange de réaction dans la machine à vis se situe dans un intervalle d'environ 0,01 à 300 Pa.s et, pour parvenir à un produit final homogène exempt de nodules, on traverse la phase de réaction critique dans laquelle le mélange de réaction est fortement collant et présente une viscosité dans l'intervalle de 10 à 100 Pa.s dans une zone des vis comportant des éléments de malaxage mélangeant énergiquement sous l'action d'une fréquence de malaxage de 1 à 20 hertz et à un gradient de vitesse de plus de 2.000 s⁻¹ dans le jeu radial entre la couronne et la paroi du logement.

4. Procédé selon les revendications 1 à 3, caractérisé en ce que l'on introduit la totalité des composants A) et C) avec 10 à 50% en poids du composant B) par un premier endroit d'admission et 90 à 50% en poids du composant B) par un deuxième et/ou troisième endroit d'admission de la machine à vis.

5. Procédé selon la revendication 4, caractérisé en ce que les proportions relatives en poids entre le composant C) et la portion du composant B) introduite à l'endroit d'admission 1 se situent entre 0,4 : 1 et 3 : 1.

6. Procédé selon les revendications 1 à 3, caractérisé en ce que l'on introduit la totalité du composant B) et 4 à 80% en poids du composant A) par un premier endroit d'admission et 96 à 20% en poids du composant A) et la totalité du composant C) par un deuxième et/ou troisième endroit d'admission de la machine à vis.

7. Procédé selon la revendication 10, caractérisé en ce que le rapport molaire entre les groupes réactifs du composant B) et ceux de la portion du composant A) introduite au premier endroit d'admission se situe entre 1,2 : 1 et 3 : 1 ou entre 0,6 : 1 et 0,9 : 1.

8. Procédé selon les revendications 1 à 3, caractérisé en ce que l'on introduit la totalité du composant B), 10 à 80% en poids du composant A) et 5 à 75% en poids du composant C) par un premier endroit d'admission et 90 à 20% en poids du composant A) avec 95 à 25% en poids du composant C) par un deuxième et/ou troisième endroit d'admission de la machine à vis.

9. Procédé selon la revendication 8, caractérisé en ce que le rapport des groupes isocyanate aux groupes actifs selon Zerewitinow des composants introduits au premier endroit d'admission se situe entre 0,90 : 1 et 1,20 : 1.

10. Procédé selon les revendications 1 à 8, caractérisé en ce que, sur la totalité des réactifs, le rapport molaire des groupes isocyanate libres à la somme des atomes d'hydrogène actifs selon Zerewitinow se situe entre 0,90 : 1 et 1,20 : 1.

FIG. 1